# EUROPÄISCHE PATENTSCHRIFT

(11) **EP 3 894 723 B1**
(45) Veröffentlichungstag und Bekanntmachung des Hinweises auf die Patenterteilung: **25.06.2025**
(21) Anmeldenummer: 19798182.2
(22) Anmeldetag: 21.10.2019
(51) Int. Cl.: F16H 7/02

(54) **RIEMENANTRIEB**
BELT DRIVE
ENTRAÎNEMENT PAR COURROIE

(30) Priorität: 11.12.2018 DE 102018221389
(43) Veröffentlichungstag der Anmeldung: 20.10.2021
(73) Patentinhaber: ContiTech Deutschland GmbH, 30175 Hannover (DE)
(72) Erfinder: MELZ, Thomas, 30419 Hannover (DE); FISS, Tim, 30419 Hannover (DE); KONYA, Alexander, 30419 Hannover (DE)
(74) Vertreter: Preusser, Andrea
(86) Internationale Anmeldenummer: PCT/EP2019/078485
(87) Internationale Veröffentlichungsnummer: WO 2020/119982

(56) Entgegenhaltungen:
- EP-A1- 0 627 575
- EP-A2- 0 068 253
- DE-A1- 10 316 599
- DE-A1- 102004 019 313
- DE-B- 1 175 054
- NL-A- 9 001 378
- US-B1- 8 327 972

## Beschreibung

Die vorliegende Erfindung betrifft einen Riemenantrieb nach dem Oberbegriff des Patentanspruchs 1, ein Antriebssystem mit einem derartigen Riemenantrieb nach dem Patentanspruch 4 sowie ein Fahrzeug mit einem derartigen Antriebssystem nach dem Patentanspruch 5.

Auf vielen technischen Gebieten werden Antriebssysteme dazu verwendet, um eine Drehbewegung einer Antriebseinheit in eine Drehbewegung einer Abtriebseinheit zu übertragen. Dies kann der Übertragung einer fortlaufenden Bewegung dienen, um z.B. die Rotation der Antriebseinheit mit einem Verbrennungsmotor, mit einem Hybridmotor oder mit einem Elektromotor eines Fahrzeugs auf die Räder des Fahrzeugs zu übertragen. Es können jedoch auch Änderungen der Stellung der Abtriebseinheit auf diese Art und Weise vorgenommen werden, um z.B. eine Lenkbewegung eines Lenkrads eines elektromechanischen Lenksystems eines Fahrzeugs auf dessen Räder zu übertragen.

Diese Kraftübertragung kann als eine Möglichkeit über einen Riemenantrieb erfolgen, welcher zwischen der Antriebseinheit und der Abtriebseinheit angeordnet ist. Ein Riemenantrieb weist als wesentliches die Last bzw. Kräfte übertragendes Element einen Riemen auf. Ein Riemen, welcher auch als Treibmittel bezeichnet werden kann, ist ein flexibles Band zur Kraftübertragung des Riemenantriebs, welcher bei diesem Anwendungsfall endlos geschlossen ist. Der Riemen verläuft üblicherweise um eine Antriebsrolle der Antriebseinheit sowie um wenigstens eine Umlenkrolle der Abtriebseinheit. Zwischen den beiden Umlenkabschnitten des Riemens, welche die Antriebsrolle bzw. die Umlenkrolle umgreifen, erstrecken sich wenigstens zwei freie Riemenabschnitte, welche je nach Richtung der Bewegung des Riemens als ziehendes Trum oder als Lasttrum sowie als gezogenes Trum oder als Leertrum bezeichnet werden können. Die Antriebsrolle und die Umlenkrolle können auch als Riemenscheiben bezeichnet werden. Die Umlenkrolle kann auch als Abtriebsrolle bezeichnet werden.

Auf seiner Innenseite, welche im Kontakt mit der Antriebsrolle und mit der Umlenkrolle steht, kann der Riemen glatt als Flachriemen oder profiliert als z.B. Keilriemen, Keilrippenriemen oder Zahnriemen ausgebildet sein. Auch sind Rundriemen bekannt.

Nachteilig ist bei derartigen Antriebssystemen mit einem Riemenantrieb, dass durch eine Zerstörung bzw. durch ein Zerreißen des Riemens z.B. durch Missbrauch, durch Fehler, durch Verschleiß oder durch sonstige Umstände die Kraftübertragung zwischen Antriebseinheit und Abtriebseinheit vollständig verloren geht. Dies bedeutet einen vollständigen Ausfall des Antriebssystems. Hierdurch kann bei einem Fahrzeug z.B. die Antriebskraft nicht mehr zur Verfügung stehen, so dass es zu einem Anhalten und Stillstand des Fahrzeugs kommen kann. Fällt der Riemen des Lenksystems als Antriebssystem aus, so kann dies das Fahrzeug nicht mehr lenkbar machen, was eine Gefahr für die Insassen sowie für die Umgebung und für weitere Verkehrsteilnehmer bedeuten kann.

Die DE 103 16 599 A1 beschreibt eine Getriebeeinrichtung für Antriebe von Kraftfahrzeuglenkungen mit mindestens einem Antriebsmotor mit Motorwelle mit mindestens zwei Antriebssträngen, die jeweils eine Zahnriemenscheibe auf der Motorwelle, einen Zahnriemenkranz auf einem Lenkgetriebe und einen Zahnriemen aufweisen, wobei der Zahnriemen die Zahnriemenscheibe und den Zahnriemenkranz eines Antriebsstranges miteinander verbindet und die Zahnteilungen von Zahnriemenscheibe, Zahnriemenkranz und Zahnriemen je Antriebsstrang gleich sind, dadurch gekennzeichnet, dass die Verzahnungen der Antriebsstränge gegeneinander einen Zahnversatz aufweisen. Dadurch ergibt sich ein besonders ruhiger und geräuscharmer Lauf des Getriebes. Die DE102004019313A beschreibt ebenfalls einen Riementrieb.

Eine Aufgabe der vorliegenden Erfindung ist es, einen Riemenantrieb der eingangs beschriebenen Art bereit zu stellen, dessen Funktionsfähigkeit auch bei Ausfall des Riemens gewährleistet werden kann. Zusätzlich oder alternativ soll die Geräuschentwicklung eines derartigen Riemenantriebs reduziert werden, um insbesondere den Fahrkomfort für den Benutzer eines Fahrzeugs mit einem derartigen Riemenantrieb zu erhöhen. Zumindest soll eine Alternativ zu bekannten derartigen Riemenantrieben bereitgestellt werden.

Die Aufgabe wird erfindungsgemäß durch einen Riemenantrieb mit den Merkmalen nach Patentanspruch 1, durch ein Antriebssystem mit den Merkmalen nach Patentanspruch 4 sowie durch ein Fahrzeug mit den Merkmalen nach Patentanspruch 5 gelöst. Vorteilhafte Weiterbildungen sind in den Unteransprüchen beschrieben.

Somit betrifft die vorliegende Erfindung einen Riemenantrieb mit einer ersten Antriebsrolle, welche ausgebildet ist, mit einer Antriebseinheit, vorzugsweise mit einer Welle einer Antriebseinheit, feststehend verbunden zu werden, mit einer ersten Abtriebsrolle, welche ausgebildet ist, mit einer Abtriebseinheit, vorzugsweise mit einer Welle einer Abtriebseinheit, feststehend verbunden zu werden, und mit einem ersten Riemen, welcher die erste Antriebsrolle kraftübertragend mit der ersten Abtriebsrolle verbindet. Derartige Riemenantriebe sind bekannt, wie eingangs beschrieben.

Der Riemenantrieb weist ferner auf: eine zweite Antriebsrolle, welche ausgebildet ist, mit der Antriebseinheit, vorzugsweise mit der Welle der Antriebseinheit, feststehend verbunden zu werden, eine zweite Abtriebsrolle, welche ausgebildet ist, mit der Abtriebseinheit, vorzugsweise mit der Welle der Abtriebseinheit, feststehend verbunden zu werden, und einen zweiten Riemen, welcher die zweite Antriebsrolle kraftübertragend mit der zweiten Abtriebsrolle verbindet. Es können je nach Anwendungsfall auch mehr als zwei Antriebsrollen, zwei Abtriebsrollen und zwei Riemen verwendet werden, um die nachfolgend beschriebenen Eigenschaften und Vorteile zu gestalten und bzw. oder zu verstärken.

Auf diese Art und Weise kann die Kraftübertragung durch jeden der beiden Riemen teilweise oder sogar vollständig durch jeden Riemen alleinig erfolgen. In jedem Fall kann eine teilweise bis vollständige Redundanz geschaffen werden, so dass bei Ausfall eines der beiden Riemen der andere verbleibende Riemen die Kraftübertragung wenigstens teilweise bis vollständig übernehmen kann. Hierdurch kann zumindest ein vorläufiger Betrieb des nun überlasteten verbleibenden Riemens als sozusagen Noteigenschaft gewährleistet werden, um das Antriebssystems mit der Antriebseinheit, der Abtriebseinheit und dem verbleibenden Riemen kontrolliert in einen sicheren Zustand wie z.B. zum Anhalten zu bringen. Bei entsprechend starker Auslegung beider Riemen kann der Betrieb auch uneingeschränkt, vom Verlust der Redundanz abgesehen, fortgesetzt werden, wie weiter unten noch näher beschrieben werden wird.

Gemäß einem Aspekt der vorliegenden Erfindung weist der Riemenantrieb genau eine erste Antriebsrolle und eine zweite Antriebsrolle, genau eine erste Abtriebsrolle und eine zweite Abtriebsrolle sowie genau einen ersten Riemen und einen zweiten Riemen auf. Hierdurch können die zuvor beschriebenen Eigenschaften der Verwendung mehrerer Riemen für einen Riemenantrieb mit einer möglichst geringen Anzahl von Antriebsrollen, Abtriebsrollen sowie Riemen erreicht werden. Dies kann die zusätzlichen Kosten für die weiteren Komponenten des Riemenantriebs geringhalten. Dies gilt ebenso für die hierdurch anfallenden Montagekosten sowie den erforderlichen Bauraum.

Erfindungsgemäß sind der erste Riemen und der zweite Riemen jeweils zur alleinigen Kraftübertragung zwischen der jeweiligen Antriebsrolle und der jeweiligen Abtriebsrolle ausgelegt. Dies kann eine vollständige Redundanz der beiden Riemen ermöglichen, so dass bei Ausfall eines Riemens der Betrieb des Riemenantriebs sowie des entsprechenden Antriebssystems mit dem verbleibenden Riemen fortgesetzt werden kann. Dies kann auch bei Ausfall eines Riemens einen sicheren Betrieb des Riemenantriebs bzw. des Antriebssystems gewährleisten, wobei auf zuvor vorhandene Redundanz zumindest solange verzichtet werden muss, bis der zweite Riemen wiederhergestellt wurde. Auf diese Art und Weise könnte z.B. ein Fahrzeug eine Werkstatt sicher erreichen, um diese mit wiederhergestellter Redundanz des Riemenantriebs zu verlassen. Aufgrund der eingebüßten Redundanz könnte die Fahrt zur Werkstatt aus Sicherheitsgründen z.B. mit einer reduzierten maximalen Geschwindigkeit erfolgen.

Erfindungsgemäß sind die Antriebsrollen als schrägverzahnte Antriebszahnräder, die Abtriebsrollen als schrägverzahnte Abtriebszahnräder und die Riemen als schrägverzahnte Zahnriemen ausgebildet, wobei das erste Antriebszahnrad, das erste Abtriebszahnrad und der erste Zahnriemen eine erste Schrägverzahnung aufweisen, welche gegenläufig zu einer zweiten Schrägverzahnung des zweiten Antriebszahnrads des zweiten Abtriebszahnrads und des zweiten Zahnriemens ausgerichtet ist.

Diesem Aspekt der vorliegenden Erfindung liegt die Erkenntnis zugrunde, dass bei einem derartigen Antriebssystem ein Zahnriemen als Riemen verwendet werden kann, was bedingt, dass die Antriebsrollen und die Abtriebsrollen als Zahnräder ausgebildet sind und jeweils eine entsprechende Schrägverzahnung aufweisen, d.h. dass die Zähne der Antriebsrollen und der Abtriebsrollen nicht parallel zur Rotationsachse angeordnet sind, sondern in einem vorbestimmten Winkel zur Rotationsachse von deutlich unter 90°. Hierdurch kann der Polygon-Effekt und damit die Zahneingriffsfrequenz reduziert werden, was die Laufruhe des Riemenantriebs verbessern sowie die Geräuschentwicklung des Riemenantriebs reduzieren kann.

Da dies bei einem einzigen Riemen nur eine vergleichsweise geringe Wirkung haben kann, ist es vorteilhaft, zwei gegenläufige Schrägverzahnungen auf den vorliegenden erfindungsgemäßen Riemenantrieb anzuwenden. Hierdurch kann die Wirkung zur Verbesserung der Laufruhe des Riemenantriebs sowie zur Reduzierung der Geräuschentwicklung des Riemenantriebs, welche durch eine Schrägverzahnung an sich erreicht werden kann, verstärkt werden.

Erfindungsgemäß weisen die erste Schrägverzahnung und die zweite Schrägverzahnung unterschiedliche Teilungen auf. Mit anderen Worten sind die Abstände zwischen allen Zähnen der jeweiligen Schrägverzahnung zwischen beiden Antriebsrollen, beiden Abtriebsrollen und beiden Riemen unterschiedlich gewählt. Auch hierdurch kann die Wirkung zur Verbesserung der Laufruhe des Riemenantriebs sowie zur Reduzierung der Geräuschentwicklung des Riemenantriebs, welche durch eine Schrägverzahnung an sich erreicht werden kann, weiter verstärkt werden, da die Zähne der Riemen nun zu unterschiedlichen Zeitpunkten auf die korrespondierenden Zähne der jeweiligen Antriebsrolle bzw. Abtriebsrolle treffen und somit die o.g. Wirkung gleichmäßiger verteilt angewendet werden kann.

Erfindungsgemäß weisen die erste Schrägverzahnung und die zweite Schrägverzahnung unterschiedliche Schrägungen auf. Mit anderen Worten weisen die beiden Schrägverzahnungen unterschiedliche Winkel zur Rotationsachse auf. Auch hierdurch kann die Wirkung zur Verbesserung der Laufruhe des Riemenantriebs sowie zur Reduzierung der Geräuschentwicklung des Riemenantriebs, welche durch eine Schrägverzahnung an sich erreicht werden kann, weiter verstärkt werden, da die Zähne der Riemen nun mit unterschiedlichen mechanischen Kontaktflächen auf die korrespondierenden Zähne der jeweiligen Antriebsrolle bzw. Abtriebsrolle treffen und somit unterschiedliche Geräusche erzeugen bzw. reduzieren können.

Gemäß einem weiteren Aspekt der vorliegenden Erfindung sind die Antriebsrollen einstückig ausgebildet und bzw. oder sind die Abtriebsrollen einstückig ausgebildet. Hierdurch kann z.B. die Anzahl der bei der Montage zu handhabenden Komponenten des Riemenantriebs reduziert werden, was die Montage vereinfachen und beschleunigen kann. Auch kann auf diese Art und Weise z.B. eine konstante Anordnung der Schrägverzahnungen zueinander gewährleistet werden.

Die vorliegende Erfindung betrifft auch ein Antriebssystem mit einer Antriebseinheit, mit einer Abtriebseinheit und mit einem Riemenantrieb wie zuvor beschrieben, welcher die Antriebseinheit und die Abtriebseinheit kraftübertragend miteinander verbindet. Hierdurch können die zuvor beschriebenen Eigenschaften und Vorteile eines erfindungsgemäßen Riemenantriebs bei einem entsprechenden Antriebssystem umgesetzt und genutzt werden.

Die vorliegende Erfindung betrifft auch ein Fahrzeug mit einem Antriebssystem wie zuvor beschrieben. Hierdurch können die zuvor beschriebenen Eigenschaften und Vorteile eines erfindungsgemäßen Antriebssystems bei einem entsprechenden Fahrzeug umgesetzt und genutzt werden.

Gemäß einem Aspekt der vorliegenden Erfindung ist das Antriebssystem zur Übertragung einer Lenkbewegung ausgebildet. Somit können die zuvor beschriebenen Eigenschaften insbesondere hinsichtlich der Verbesserung der Sicherheit und bzw. oder hinsichtlich der Verbesserung des akustischen Verhaltens des Antriebssystems gerade als Lenksystem umgesetzt und genutzt werden, da ein Ausfall einer Lenkung eines Fahrzeugs eine besonders hohe Sicherheitsgefährdung darstellen kann sowie die Lenkbewegungen fortlaufend zu einer Geräuschentwicklung des Riemenantriebs führen können.

Mehrere Ausführungsbeispiele und weitere Vorteile der Erfindung werden nachstehend im Zusammenhang mit den folgenden Figuren erläutert. Darin zeigt:
- Fig. 1: eine schematische Draufsicht auf einen erfindungsgemäßen Riemenantrieb gemäß einem ersten Ausführungsbeispiel bei einem erfindungsgemäßen Antriebssystem;
- Fig. 2: eine schematische Draufsicht auf einen erfindungsgemäßen Riemenantrieb gemäß einem zweiten Ausführungsbeispiel bei einem erfindungsgemäßen Antriebssystem;
- Fig. 3: eine schematische Draufsicht auf einen erfindungsgemäßen Riemenantrieb gemäß einem dritten Ausführungsbeispiel bei einem erfindungsgemäßen Antriebssystem; und
- Fig. 4: eine schematische Draufsicht auf einen erfindungsgemäßen Riemenantrieb gemäß einem vierten Ausführungsbeispiel bei einem erfindungsgemäßen Antriebssystem.

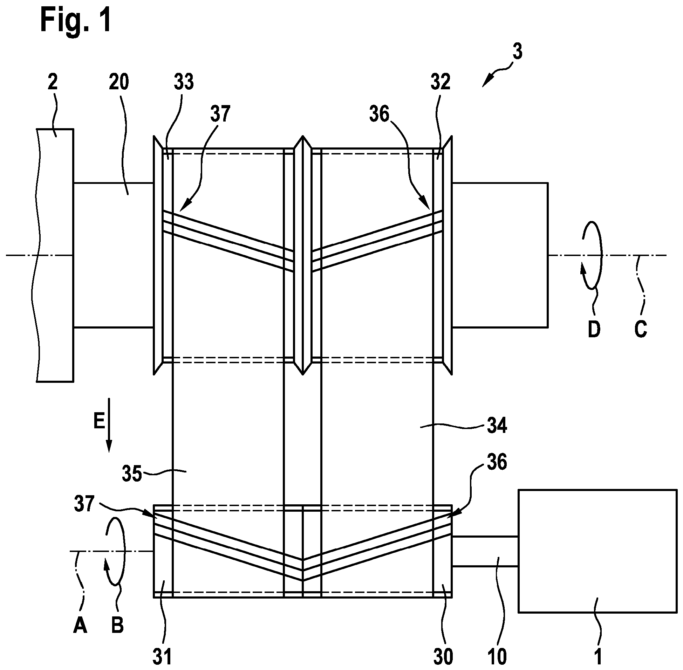

Fig. 1 zeigt eine schematische Draufsicht auf einen erfindungsgemäßen Riemenantrieb 3 gemäß einem ersten Ausführungsbeispiel bei einem erfindungsgemäßen Antriebssystem.

Das Antriebssystem weist eine Antriebseinheit 1 mit einer Welle 10 auf, welche durch die Antriebseinheit 1 um eine Rotationsachse A in einer Rotationsrichtung B angetrieben werden kann. Das Antriebssystem weist ferner eine Abtriebseinheit 2 mit einer Welle 20 auf, welche durch die Abtriebseinheit 2 um eine Rotationsachse C in einer Rotationsrichtung D angetrieben werden kann. Von der Abtriebseinheit 2 kann somit eine Rotationsbewegung um die Rotationsachse C in der Rotationsrichtung D an eine weitere Einheit (nicht dargestellt) abgegeben werden, um diese rotatorisch zu bewegen.

Um die Rotationsbewegung der Antriebseinheit 1 um die Rotationsachse A in der Rotationsrichtung B auf die Abtriebseinheit 2 zu übertragen, ist die Antriebseinheit 1 mittels des zuvor bereits erwähnten Riemenantriebs 3 mit der Abtriebseinheit 2 kraftübertragend verbunden. Hierzu weist der Riemenantrieb 3 eine erste Antriebsrolle 30 und eine zweite Antriebsrolle 31 auf, welche gemeinsam nebeneinander feststehend auf der Welle 10 der Antriebseinheit 1 angeordnet sind. Korrespondierend weist der Riemenantrieb 3 eine erste Abtriebsrolle 32 und eine zweite Abtriebsrolle 33 auf, welche gemeinsam nebeneinander feststehend auf der Welle 20 der Abtriebseinheit 2 angeordnet sind. Der Riemenantrieb 3 weist einen ersten Riemen 34 auf, welcher endlos geschlossen ist und die erste Antriebsrolle 30 und die erste Abtriebsrolle 32 umschlingt. Ferner weist der Riemenantrieb 3 einen zweiten Riemen 35 auf, welcher ebenfalls endlos geschlossen ist und die zweite Antriebsrolle 31 und die zweite Abtriebsrolle 33 umschlingt.

Auf diese Art und Weise kann die Rotationsbewegung der Welle 10 der Antriebseinheit 1 über die beiden Riemen 34, 35 in einer Bewegungsrichtung E gemeinsam auf die Welle 20 der Abtriebseinheit 2 übertragen werden, so dass bei einem Ausfall eines der beiden Riemen 34, 35, die Übertragung der Rotationsbewegung bzw. der Kraft grundsätzlich weiterhin erfolgen kann.

Ist jeder Riemen 34, 35 zu schwach für eine alleinige Übertragung der Rotationsbewegung bzw. der Kraft ausgelegt, so kann zum Zeitpunkt des Ausfalls eines Riemens 34, 35 die Funktionsfähigkeit des Riemenantriebs 3 aufgrund des verbleibenden überlasteten Riemens 34, 35 für einen gewissen Zeitraum aufrechterhalten werden was ausreichend sein kann, das Antriebssystem in einen sicheren Zustand zu überführen.

Ist jeder Riemen 34, 35 dazu ausgelegt, die Übertragung der Rotationsbewegung bzw. der Kraft alleinig ausführen zu können, so kann von einem redundanten Riemenantrieb 3 gesprochen werden, da bei Ausfalls eines Riemens 34, 35 der verbleibende Riemen 34, 35 ausreichend ist, um den Betrieb des Riemenantriebs 3 dauerhaft fortzusetzen, wenn auch ohne Redundanz. Dies kann auch in diesem Fall dazu verwendet werden, das Antriebssystem in einen sicheren Zustand zu überführen, dabei jedoch die Funktion des Antriebssystems sicher nutzen zu können.

Um gleichzeitig eine Verbesserung der Laufruhe des Riemenantriebs 3 sowie eine Reduzierung der Geräuschentwicklung des Riemenantriebs 3 zu erreichen, ist die erste Antriebsrolle 30 als erstes Antriebszahnrad 30, die zweite Antriebsrolle 31 als zweites Antriebszahnrad 31, die erste Abtriebsrolle 32 als erstes Abtriebszahnrad 32, die zweite Abtriebsrolle 33 als zweites Abtriebszahnrad 33, der erste Riemen 34 als erster Zahnriemen 34 und der zweite Riemen 35 als zweiter Zahnriemen 35 ausgebildet. Dabei weisen das erste Antriebszahnrad 30, das erste Abtriebszahnrad 32 und der erste Zahnriemen 34 eine erste Schrägverzahnung 36 auf, welche gegenläufig zu einer zweiten Schrägverzahnung 37 des zweiten Antriebszahnrads 31, des zweiten Abtriebszahnrads 33 und des zweiten Zahnriemens 35 ausgerichtet ist. Hierdurch kann die Wirkung zur Verbesserung der Laufruhe des Riemenantriebs 3 sowie zur Reduzierung der Geräuschentwicklung des Riemenantriebs 3, welche durch eine Schrägverzahnung 36, 37 an sich erreicht werden kann, bei dem erfindungsgemäßen Riemenantrieb 3 genutzt werden. Die Anwendung einer Schrägverzahnung 36, 37 bei jedem Zahnriemen 34, 35 kann diese Wirkung noch verstärken.

Dabei weisen die beiden Antriebszahnräder 30, 31, die beiden Abtriebszahnräder 32,33 sowie die beiden Zahnriemen 34, 35 in dem ersten Ausführungsbeispiel der Fig. 1 dieselbe Teilung, d.h. denselben Abstand zueinander in der Bewegungsrichtung E, zwischen den einzelnen Zähnen der Schrägverzahnungen 36, 37 auf. Auch sind die Zähne der Schrägverzahnungen 36, 37 direkt zueinander ausgerichtet, sozusagen spiegelbildlich. Ferner weisen die Zähne der Schrägverzahnungen 36, 37 denselben Winkel gegenüber den Rotationsachsen A, C der Wellen 10, 20 auf.

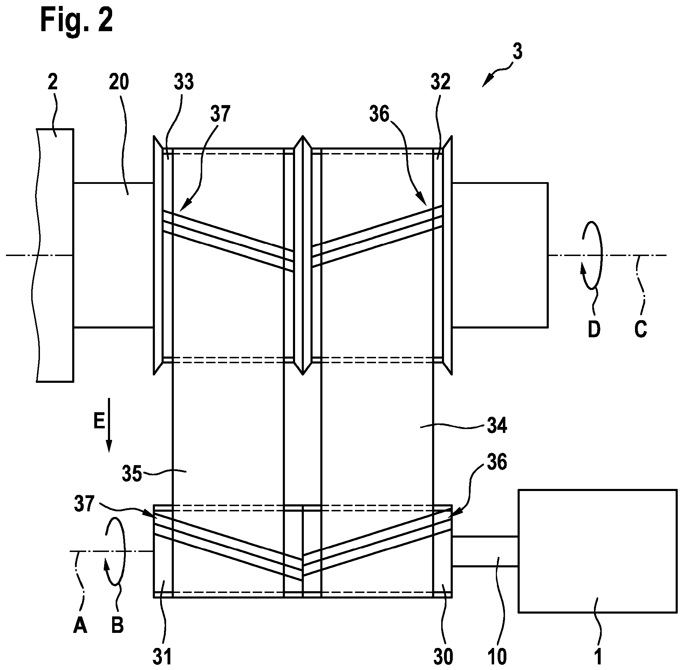

Fig. 2 zeigt eine schematische Draufsicht auf einen erfindungsgemäßen Riemenantrieb 3 gemäß einem zweiten Ausführungsbeispiel bei einem erfindungsgemäßen Antriebssystem. In diesem Fall weisen die Zähne der Schrägverzahnungen 36, 37 der beiden Antriebszahnräder 30, 31, der beiden Abtriebszahnräder 32, 33 sowie der beiden Zahnriemen 34, 35 ebenfalls dieselbe Teilung, d.h. denselben Abstand zueinander in der Bewegungsrichtung E, auf. Auch weisen die Zähne der Schrägverzahnungen 36, 37 erneut denselben Winkel gegenüber den Rotationsachsen A, C der Wellen 10, 20 auf.

Jedoch weist die erste Schrägverzahnung 36 gegenüber der zweiten Schrägverzahnung 37 einen Teilungsversatz auf, d.h. die erste Schrägverzahnung 36 beginnt in der Bewegungsrichtung E an einer anderen Position des ersten Antriebszahnrads 30 bzw. des ersten Abtriebszahnrads 32 als die zweite Schrägverzahnung 37. Hierdurch kann die Wirkung zur Verbesserung der Laufruhe des Riemenantriebs 3 sowie zur Reduzierung der Geräuschentwicklung des Riemenantriebs 3 beeinflusst und verbessert werden.

Vorteilhaft ist hierbei auch, dass durch die Verwendung von zwei Zahnriemen 34, 35, welche gegenläufig schrägverzahnt sind und mit versetzten Zähnen auf den beiden Antriebszahnrädern 30, 31 und beiden Abtriebszahnräder 32, 33 montiert sind, die Belastung in der Querrichtung Y in der Riemenmitte in der Bewegungsrichtung E reduziert oder sogar vermieden werden kann. Eine hohe Spaltbelastung durch gegenläufige Querkräfte kann verhindert werden. Eine schlechte Passung der Zahnriemen 34, 35 zu den beiden Antriebszahnrädern 30, 31 und den beiden Abtriebszahnräder 32, 33 sowie die Gefahr, dass nur auf einer Verzahnungsseite die Flanke optimal anliegt, durch den zweiteiligen Aufbau verhindert werden.

Außerdem ist das Herstellen der Zahnriemen 34, 35 mit großer gegenläufiger Schrägverzahnung mit herkömmlichen Herstellverfahren möglich, z.B. durch Druchdrückverfahren bei Gummizahnriemen. Dadurch können die Zahnriemen 34, 35 deutlich kostengünstiger hergestellt werden. Für die beiden Antriebszahnrädern 30, 31 und die beiden Abtriebszahnräder 32, 33 gilt dies analog, da diese nicht aus einem Bauteil gefertigt werden müssen. Trotzdem bleiben die akustischen Vorteile bestehen.

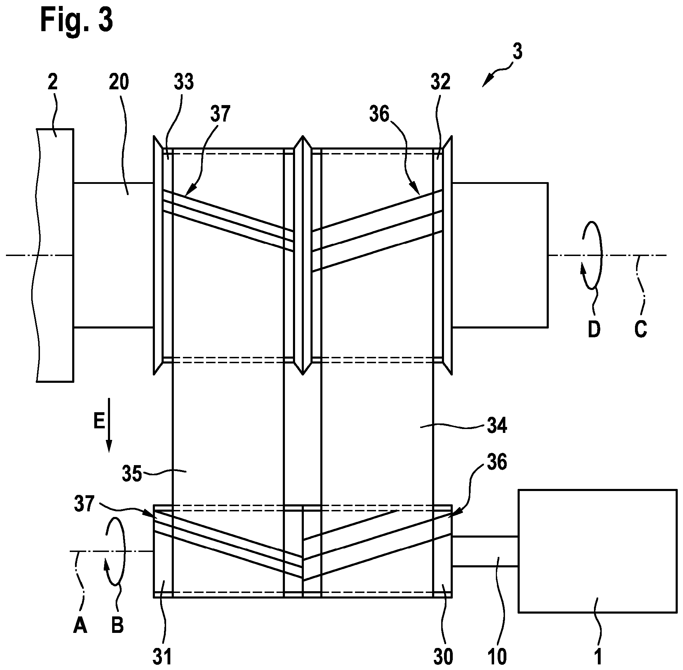

Fig. 3 zeigt eine schematische Draufsicht auf einen erfindungsgemäßen Riemenantrieb 3 gemäß einem dritten Ausführungsbeispiel bei einem erfindungsgemäßen Antriebssystem.

In diesem Fall weisen die Zähne der Schrägverzahnungen 36, 37 abermals denselben Winkel gegenüber den Rotationsachsen A, C der Wellen 10, 20 auf. Jedoch weisen die Zähne der Schrägverzahnungen 36, 37 der beiden Antriebszahnräder 30, 31, der beiden Abtriebszahnräder 32, 33 sowie der beiden Zahnriemen 34, 35 eine unterschiedliche Teilung, d.h. unterschiedliche Abstände zueinander in der Bewegungsrichtung E, auf. Hierdurch kann die Wirkung zur Verbesserung der Laufruhe des Riemenantriebs 3 sowie zur Reduzierung der Geräuschentwicklung des Riemenantriebs 3 beeinflusst und verbessert werden.

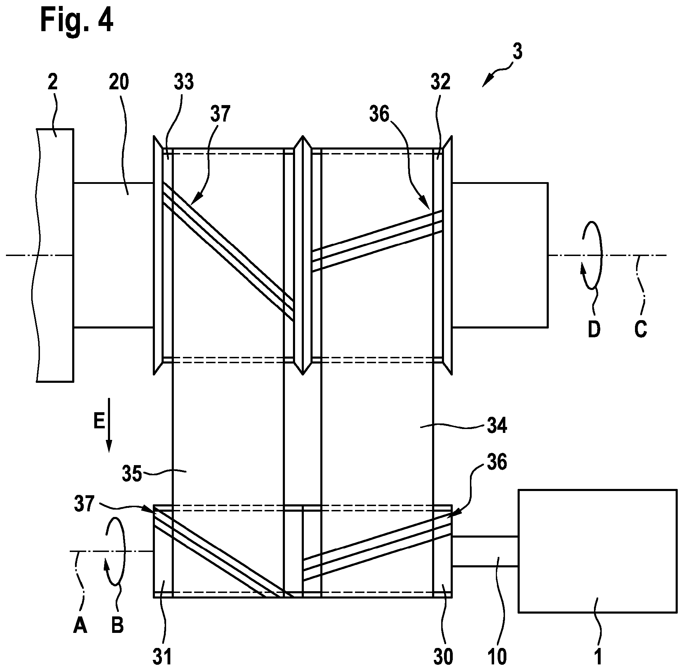

Fig. 4 zeigt eine schematische Draufsicht auf einen erfindungsgemäßen Riemenantrieb 3 gemäß einem vierten Ausführungsbeispiel bei einem erfindungsgemäßen Antriebssystem. In diesem Fall weisen die Zähne der Schrägverzahnungen 36, 37 der beiden Antriebszahnräder 30, 31, der beiden Abtriebszahnräder 32, 33 sowie der beiden Zahnriemen 34, 35 wieder dieselbe Teilung, d.h. denselben Abstand zueinander in der Bewegungsrichtung E, auf. Auch sind die Zähne der Schrägverzahnungen 36, 37 wieder direkt zueinander ausgerichtet, sozusagen spiegelbildlich.

Jedoch weisen die Zähne der Schrägverzahnungen 36, 37 in diesem Fall unterschiedliche Winkel gegenüber den Rotationsachsen A, C der Wellen 10, 20 auf, so dass die erste Schrägverzahnung 36 und die zweite Schrägverzahnung 37 unterschiedliche Schrägungen aufweisen. Auch hierdurch kann die Wirkung zur Verbesserung der Laufruhe des Riemenantriebs 3 sowie zur Reduzierung der Geräuschentwicklung des Riemenantriebs 3 beeinflusst und verbessert werden.

Die zuvor beschriebene Eigenschaften und Vorteile eines erfindungsgemäßen Riemenantriebs 3 sowie eines erfindungsgemäßen Antriebssystems lassen sich besonders vorteilhaft bei einem Fahrzeug nutzen, um z.B. bei einem Lenksystem zur Übertragung einer Lenkbewegung als Antriebssystem sowohl dessen Ausfallsicherheit zu gewährleisten bzw. zumindest zu reduzieren als auch die Geräuschentwicklung an dieser Stelle zu reduzieren, welche durch die üblicherweise regelmäßig erforderlichen Lenkbewegungen erzeugt werden können.

Der Anwendung bei einem Lenksystem kann durch die zunehmende Verwendung von Steer-by-Wire-Systemen insbesondere bei Elektrofahrzeugen eine besondere Bedeutung zukommen, um die Sicherheit derartiger Systeme zu verbessern bzw. zu gewährleisten. Auch können jegliche Geräuschentwicklungen bei Elektrofahrzeugen von den Insassen besonders deutlich wahrgenommen werden, da diese Geräusche nicht von den Betriebsgeräuschen eines Verbrennungsmotors übertönt werden können. Dies kann für von Personen gesteuerte Fahrzeuge ebenso wie für autonome Fahrzeuge gelten.

### Bezugszeichenliste (Teil der Beschreibung)

- A: Rotationsachse der Antriebseinheit 1
- B: Rotationsrichtung der Antriebseinheit 1
- C: Rotationsachse der Abtriebseinheit 2
- D: Rotationsrichtung der Abtriebseinheit 2
- E: Bewegungsrichtung des Riemenantriebs 3

- 1: Antriebseinheit
- 10: Welle der Antriebseinheit 1

- 2: Abtriebseinheit
- 20: Welle der Abtriebseinheit 2

- 3: Riemenantrieb
- 30: erste Antriebsrolle; erstes Antriebszahnrad
- 31: zweite Antriebsrolle; zweites Antriebszahnrad
- 32: erste Abtriebsrolle; erstes Abtriebszahnrad
- 33: zweite Abtriebsrolle; zweites Abtriebszahnrad
- 34: erster (Zahn-)Riemen
- 35: zweiter (Zahn-)Riemen
- 36: erste Schrägverzahnung
- 37: zweite Schrägverzahnung

## Patentansprüche

1. Riemenantrieb (3)
mit einer ersten Antriebsrolle (30), welche ausgebildet ist, mit einer Antriebseinheit (1), vorzugsweise mit einer Welle (10) einer Antriebseinheit (1), feststehend verbunden zu werden,
mit einer ersten Abtriebsrolle (32), welche ausgebildet ist, mit einer Abtriebseinheit (2), vorzugsweise mit einer Welle (20) einer Abtriebseinheit (2), feststehend verbunden zu werden, und
mit einem ersten Riemen (34), welcher die erste Antriebsrolle (30) kraftübertragend mit der ersten Abtriebsrolle (32) verbindet,
mit einer zweiten Antriebsrolle (31), welche ausgebildet ist, mit der Antriebseinheit (1), vorzugsweise mit der Welle (10) der Antriebseinheit (1), feststehend verbunden zu werden,
mit einer zweiten Abtriebsrolle (33), welche ausgebildet ist, mit der Abtriebseinheit (2), vorzugsweise mit der Welle (20) der Abtriebseinheit (2), feststehend verbunden zu werden, und
mit einem zweiten Riemen (35), welcher die zweite Antriebsrolle (31) kraftübertragend mit der zweiten Abtriebsrolle (33) verbindet,
wobei die Antriebsrollen (30, 31) als schrägverzahnte Antriebszahnräder (30, 31), die Abtriebsrollen (32, 33) als schrägverzahnte Abtriebszahnräder (32, 33) und die Riemen (34, 35) als schrägverzahnte Zahnriemen (34, 35) ausgebildet sind und wobei das erste Antriebszahnrad (30), das erste Abtriebszahnrad (32) und der erste Zahnriemen (34) eine erste Schrägverzahnung (36) aufweisen, welche gegenläufig zu einer zweiten Schrägverzahnung (37) des zweiten Antriebszahnrads (31), des zweiten Abtriebszahnrads (33) und des zweiten Zahnriemens (35) ausgerichtet ist,
**dadurch gekennzeichnet, dass**
die erste Schrägverzahnung (36) und die zweite Schrägverzahnung (37) unterschiedliche Schrägungen aufweisen, und dass der erste Riemen (34) und der zweite Riemen (35) jeweils zur alleinigen Kraftübertragung zwischen der jeweiligen Antriebsrolle (30; 31) und der jeweiligen Abtriebsrolle (32; 33) ausgelegt sind, und dass
die erste Schrägverzahnung (36) und die zweite Schrägverzahnung (37) unterschiedliche Teilungen aufweisen.

2. Riemenantrieb (3) nach Anspruch 1, **gekennzeichnet durch**
genau eine erste Antriebsrolle (30) und eine zweite Antriebsrolle (31), genau eine erste Abtriebsrolle (32) und eine zweite Abtriebsrolle (33) sowie genau einen ersten Riemen (34) und einen zweiten Riemen (35).

3. Riemenantrieb (3) nach einem der vorangehenden Ansprüche, **dadurch gekennzeichnet, dass**
die Antriebsrollen (30, 31) einstückig ausgebildet sind, und/oder
die Abtriebsrollen (32, 33) einstückig ausgebildet sind.

4. Antriebssystem
mit einer Antriebseinheit (1),
mit einer Abtriebseinheit (2) und
mit einem Riemenantrieb (3) nach einem der vorangehenden Ansprüche, welcher die Antriebseinheit (1) und die Abtriebseinheit (2) kraftübertragend miteinander verbindet.

5. Fahrzeug,
mit einem Antriebssystem nach Anspruch 4.

6. Fahrzeug nach Anspruch 5, **dadurch gekennzeichnet, dass**
das Antriebssystem zur Übertragung einer Lenkbewegung ausgebildet ist.

## Claims

1. Belt drive (3)
having a first drive pulley (30), which is designed to be fixedly connected to a drive unit (1), preferably to a shaft (10) of a drive unit (1),
having a first output pulley (32), which is designed to be fixedly connected to an output unit (2), preferably to a shaft (20) of an output unit (2), and
having a first belt (34), which connects the first drive pulley (30) force-transmittingly to the first output pulley (32),
having a second drive pulley (31), which is designed to be fixedly connected to the drive unit (1), preferably to the shaft (10) of the drive unit (1),
having a second output pulley (33), which is designed to be fixedly connected to the output unit (2), preferably to the shaft (20) of the output unit (2), and
having a second belt (35), which connects the second drive pulley (31) force-transmittingly to the second output pulley (33),
wherein the drive pulleys (30, 31) are designed as helically toothed drive gearwheels (30, 31), the output pulleys (32, 33) as helically toothed output gearwheels (32, 33) and the belts (34, 35) as helically toothed toothed belts (34, 35), and
wherein the first drive gearwheel (30), the first output gearwheel (32) and the first toothed belt (34) have a first helical toothing (36), which is oriented in the opposite direction to a second helical toothing (37) of the second drive gearwheel (31), the second output gearwheel (33) and the second toothed belt (35),
**characterized in that**
the first helical toothing (36) and the second helical toothing (37) have different slopes, and **in that**
the first belt (34) and the second belt (35) are each designed to transmit force by themselves between the respective drive pulley (30; 31) and the respective output pulley (32; 33), and **in that**
the first helical toothing (36) and the second helical toothing (37) have different pitches.

2. Belt drive (3) according to Claim 1, **characterized by**
precisely one first drive pulley (30) and one second drive pulley (31), precisely one first output pulley (32) and one second output pulley (33), and precisely one first belt (34) and one second belt (35).

3. Belt drive (3) according to either of the preceding claims, **characterized in that**
the drive pulleys (30, 31) are formed in one piece, and/or
the output pulleys (32, 33) are formed in one piece.

4. Drive system
having a drive unit (1),
having an output unit (2), and
having a belt drive (3) according to any one of the preceding claims, which connects the drive unit (1) and the output unit (2) force-transmittingly to each other.

5. Vehicle
having a drive system according to Claim 4.

6. Vehicle according to Claim 5, **characterized in that**
the drive system is designed to transmit a steering movement.

## Revendications

1. Entraînement par courroie (3)
avec un premier rouleau d'entraînement (30), qui est réalisé pour être relié de manière fixe à une unité d'entraînement (1), de préférence à un arbre (10) d'une unité d'entraînement (1),
avec un premier rouleau entraîné (32), qui est réalisé pour être relié de manière fixe à une unité entraînée (2), de préférence à un arbre (20) d'une unité entraînée (2), et
avec une première courroie (34) qui relie le premier rouleau d'entraînement (30) au premier rouleau entraîné (32) en transmettant la force,
avec un deuxième rouleau d'entraînement (31), qui est réalisé pour être relié de manière fixe à l'unité d'entraînement (1), de préférence à l'arbre (10) de l'unité d'entraînement (1),
avec un deuxième rouleau entraîné (33), qui est réalisé pour être relié de manière fixe à l'unité entraînée (2), de préférence à l'arbre (20) de l'unité entraînée (2), et avec une deuxième courroie (35) qui relie le deuxième rouleau d'entraînement (31) au deuxième rouleau entraîné (33) en transmettant la force,
les rouleaux d'entraînement (30, 31) étant réalisés sous forme de roues dentées d'entraînement à denture hélicoïdale (30, 31), les rouleaux entraînés (32, 33) sous forme de roues dentées entraînées à denture hélicoïdale (32, 33) et les courroies (34, 35) sous forme de courroies dentées à denture hélicoïdale (34, 35) et
la première roue dentée d'entraînement (30), la première roue dentée entraînée (32) et la première courroie dentée (34) présentant une première denture hélicoïdale (36) qui est orientée en sens inverse d'une deuxième denture hélicoïdale (37) de la deuxième roue dentée d'entraînement (31), de la deuxième roue dentée entraînée (33) et de la deuxième courroie dentée (35),
**caractérisé en ce que**
la première denture hélicoïdale (36) et la deuxième denture hélicoïdale (37) présentent des inclinaisons différentes, et **en ce que**
la première courroie (34) et la deuxième courroie (35) sont chacune conçues pour transmettre la force uniquement entre le rouleau d'entraînement respectif (30 ; 31) et le rouleau entraîné respectif (32 ; 33), et **en ce que**
la première denture hélicoïdale (36) et la deuxième denture hélicoïdale (37) présentent des pas différents.

2. Entraînement par courroie (3) selon la revendication 1, **caractérisé par** exactement un premier rouleau d'entraînement (30) et un deuxième rouleau d'entraînement (31), exactement un premier rouleau entraîné (32) et un deuxième rouleau entraîné (33) ainsi qu'exactement une première courroie (34) et une deuxième courroie (35).

3. Entraînement par courroie (3) selon l'une quelconque des revendications précédentes, **caractérisé en ce que**
les rouleaux d'entraînement (30, 31) sont réalisés d'une seule pièce, et/ou
les rouleaux entraînés (32, 33) sont réalisés d'une seule pièce.

4. Système d'entraînement
avec une unité d'entraînement (1),
avec une unité entraînée (2) et
avec un entraînement par courroie (3) selon l'une quelconque des revendications précédentes, qui relie l'unité d'entraînement (1) et l'unité entraînée (2) en transmettant la force.

5. Véhicule,
avec un système d'entraînement selon la revendication 4.

6. Véhicule selon la revendication 5, **caractérisé en ce que**
le système d'entraînement est réalisé pour transmettre un mouvement de direction.
